Europäisches Patentamt

European Patent Office

Office européen des brevets

(19)

(11) Numéro de publication : **0 332 673 B1**

# (12) FASCICULE DE BREVET EUROPEEN

(45) Date de publication du fascicule du brevet :
**05.08.92 Bulletin 92/32**

(51) Int. Cl.⁵ : **B29C 47/60**

(21) Numéro de dépôt : **88907587.5**

(22) Date de dépôt : **14.09.88**

(86) Numéro de dépôt international :
**PCT/BE88/00024**

(87) Numéro de publication internationale :
**WO 89/02359 23.03.89 Gazette 89/07**

(54) **VIS D'EXTRUSION DE MATIERES THERMOPLASTIQUES.**

(30) Priorité : **16.09.87 BE 8701043**

(43) Date de publication de la demande :
**20.09.89 Bulletin 89/38**

(45) Mention de la délivrance du brevet :
**05.08.92 Bulletin 92/32**

(84) Etats contractants désignés :
**AT BE CH DE FR GB IT LI LU NL SE**

(56) Documents cités :
**DE-A- 1 954 287**
**DE-A- 2 222 430**
**DE-A- 3 432 263**

(73) Titulaire : **JULIEN, Philippe**
**323, Avenue Molière**
**B-1060 Bruxelles (BE)**

(72) Inventeur : **JULIEN, Philippe**
**323, Avenue Molière**
**B-1060 Bruxelles (BE)**

(74) Mandataire : **de Kemmeter, François et al**
**Cabinet Bede 13, avenue Antoine Depage**
**B-1050 Bruxelles (BE)**

**Description**

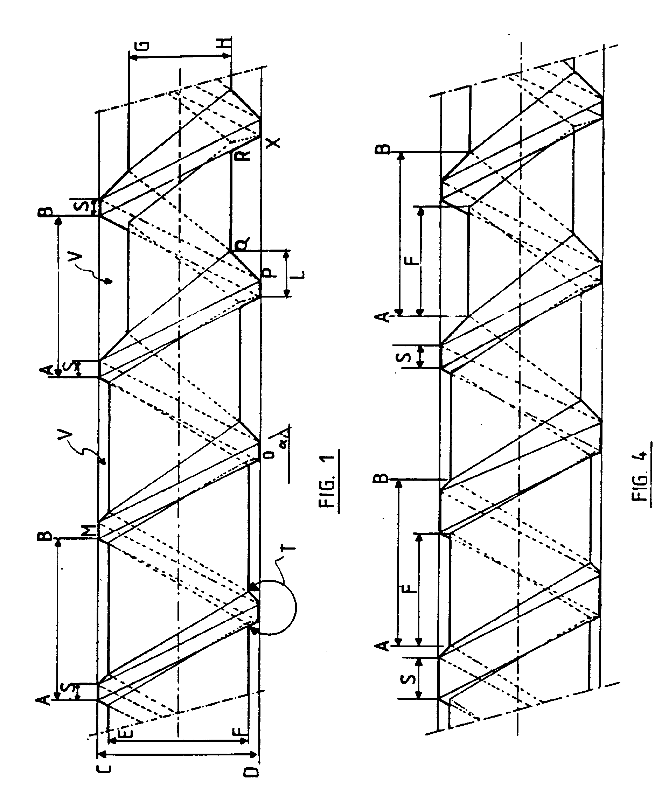

La présente invention est relative à une vis d'extrusion pour matières thermoplastiques. En général, une vis d'extrusion pour matières plastiques est basée sur le principe d'une vis d'Archimède. Elle comporte, dans la conception classique et connue, les caractéristiques suivants, représentées pour une meilleure intelligence et une présentation plus concise dans les figures 1 à 3, dans lesquelles :

– la figure 1 représente schématiquement une coupe longitudinale d'une partie de la vis

– la figure 2 représente à titre d'exemple, une coupe partielle longitudinale à travers le profil de deux spires consécutives, et,

– la figure 3 est la même coupe que la figure 2 sauf qu'elle montre l'allure de la compression exercée sur la matière plastique en cours d'extrusion.

Dans la figure 1 sont représentées les caractéristiques classiques suivantes :

– l'angle d'inclinaison ou l'angle d'hélice du filet, désigné α

– le pas AB du filet, il est aussi égal à tg α

– le diamètre extérieur CD de la vis,

– le diamètre intérieur ou diamètre du noyau, désigné EF ou GH

– la tête T du filet

– la spire MO

– la largeur du filet ou largeur L de la spire

– la section utile de la vis est donnée par la surface PQRX

Dans la figure 2 sont représentées les caractéristiques classiques suivantes :

– V le vide ou le creux du filet

– T la tête du filet

– PQRX la section utile de la vis

– S la largeur du sommet du filet

– QR la largeur du fond du filet

– γ l'angle formé par le flanc du filet et l'axe longitudinal de la vis en direction amont

– δ l'angle formé par le flanc du filet et l'axe longitudinal de la vis en direction aval.

La longueur d'une vis classique d'extrusion, comme décrit dans DE-A-3 432 263, dépend du matériau à transformer et de la forme du profil à obtenir par extrusion. Typiquement elle varie de 12 à 53 fois le diamètre extérieur CD.

Le but d'une vis d'extrudeuse est triple à savoir

– de transporter la matière plastique d'une trémie d'alimentation où elle est introduite vers une filière où la matière prend la profil donné par celle-là.

– d'opérer l'homogénéisation par friction contre le cylindre du corps de l'extrudeuse en même temps que sa fluidification, par élévation de température

– de transmettre une compression à toute la matière.

Pour cela, une vis classique comporte au moins trois zones différentes, distinguées par un profil de filet optimalisé pour répondre à chacune de ces exigences. D'habitude la première partie de la vis (premier tiers) est conçu pour faire progresser la matière sans modification sensible des caractéristiques physiques.

La partie centrale (deuxième tiers) est conçu pour amorcer le changement d'état physique par chauffage c'est-à-dire le passage de l'état solide à l'état fondu de la matière thermoplastiques.

Le mécanisme de la fusion d'une matière thermoplastique dans une extrudeuse est compliqué et loin d'être une fusion homogène.

La troisième partie de la vis (troisième tiers) est conçu pour accentuer la pression soit par une diminution de la profondeur des filets soit par une augmentation du pas du filet. La partie encore solide du mélange se désagrège en petites particules que se mélangent à la phase déjà fondue en même temps que la mise en pression du mélange fluide est assurée pour l'élever au taux de compression voulu.

On appelle le "taux de compresion" le quotient de la section utile PQRX à l'entrée de la vis à la section utile à la sortie. Il est bien évident qu'il faudra un taux de compression bien supérieur si l'on transforme un matériau en poudre que si le matériau se présente en granulés, puisqu'à poids constant, on aura dans le premier cas un volume beaucoup plus important du fait d'une masse volumique (ou densité apparente) plus faible. Il est inutile d'essayer d'augmenter le taux de compression en augmentant la vitesse de rotation de la vis. Cela ne correspondrait souvent qu'à une dépense supplémentaire d'énergie, pouvant conduire à un dérèglement des diverses températures de l'extrudeuse, par suite d'un échauffement dû à un travail mécanique trop intense.

Dans l'art antérieur à l'invention, le taux de compression et la longueur de la vis ne suffisent pas toujours pour assurer une bonne homogénéité du matériau. Souvent d'autres modifications dans la conception des vis sont effectuées par exemple l'ajonction de doigts mélangeurs dans un ou plusieurs filets de vis ou l'emploi d'une cambrure dans un ou plusieurs filets, ou l'emploi de multiples vis engrenées, ou encore l'équipement des vis au moyen d'une variété d'éléments différents successifs. Toutes ces modifications et dispositifs additionels sont coûteux, encombrants et vulnérables.

La présente invention vise à remédier aux inconvénients précités. On garde toujours l'exécution et la conception d'une vis unique mais, au lieu d'augmenter le taux de compression soit par augmentation du diamètre du noyau soit par renserrage du pas de la vis comme on le faisait dans le technique antérieur à l'invention. On garde la largeur du fond du filet QR en même temps que le pas constant tandis que le diamètre intérieur du noyau augmente. Il en résulte que la largeur des sommets du filet augmente au fur et à mesure que le diamètre intérieur ou diamètre du noyau (GH ou EF respectivement) est augmenté.

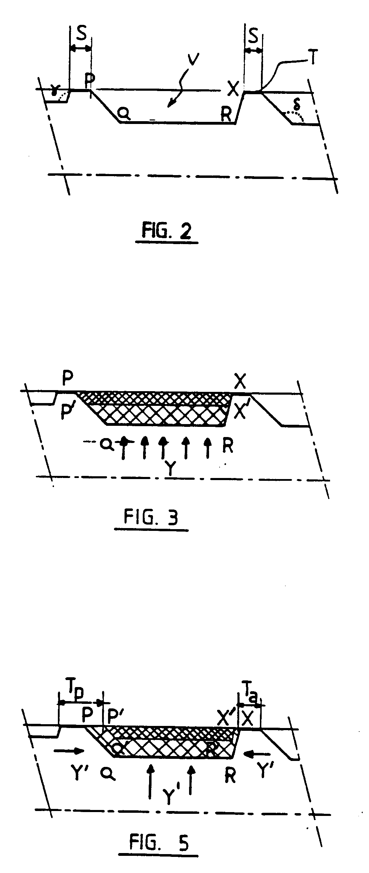

Un exemple de réalisation d'une vis d'extrusion conforme à l'invention est maintenant illustré en se référant aux figures 4 et 5 des dessins où :

– la figure 4 est une vue en coupe longitudinale de la vis, comparable à la figure 1 et

– la figure 5 est une vue en coupe longitudinale partielle au niveau de deux spires successives, comparables à la figure 3.

Sur la figure 4 on voit que d'un bout à l'autre de la longueur représentée (et il en est de même sur toute la longueur de la vis) la largeur F du fond du filet reste constante en même temps que le pas AB du filet. Par contre, la largeur S du sommet du filet augmente en direction de la tête de l'extrudeuse (direction aval).

En comparant avec la figure 1, illustrative de la technique antérieure, on note que dans les deux cas le pas reste constant mais que dans la technique antérieure, c'est la largeur S du sommet du filet qui est également constante alors que la largeur F du fond du filet varie en augmentant vers l'aval.

Les effets de compression exercés par ces deux techniques apparaissent en comparant les figures 3 et 5 où les surfaces à grandes hachures en croix représentent la réduction du volume effectif et donc également la réduction de la section utile, donnant ainsi une idée de la compression exercée, au passage d'une section de diamètre donné du noyau à une section où la diamètre du noyau est plus grand. Les petites hachures croisées représentent chaque fois ce qui reste du volume utile.

On remarquera que dans l'exécution selon l'art antérieur conforme à la figure 3, la compression du chenal formé par le fond QR du filet et les flancs du filet en pente PQ et RX respectivement s'effectue presque exclusivement de façon radiale, dans le sens indiqué par les flèches Y , la section originale utile du filet représentée par la surface PQRX étant réduite après une révolution de la vis à celle décrite par PP'–X'X. La largeur P'X' est nettement supérieure à celle de QR, la largeur du fond du filet.

Par contre avec une vis conforme à l'invention et dont une coupe partielle analogue est représentée dans la figure 5, on remarque qu'après une révolution de la vis la réduction de la section originale utile s'est faite dans le sens radial en même temps que axial comme représentée par les flèches Y' , la surface initiale PQRX étant réduite à celle décrite par P'Q'R'X'. La largeur Q'R' est complètement identique à la largeur QR du fond du filet.

Cette compression de la matière exercée selon l'invention dans les directions radiales et axiales conduit à une répartition plus égale des forces de frottement entre le cylindre de l'extrudeuse et la vis. Par conséquent un chauffage de la matière thermoplastique plus régulier est effectué sans point de surchauffe localisé pouvant conduire à la dégradation de la matière transformée. Cette caractéristique est plus importante encore pour des mélanges de diverses matières ou pour des alliages de polymères très sensibles.

Le fait que le largeur des sommets du filet augmente au fur et à mesure que la dimension du noyau augmente apporte encore deux autres avantages supplémentaires : premièrement, la surface accrue des sommets du filet offre une plus grande résistance au repassage de la matière entre deux spires successives, ce qui augmente nettement l'efficience de la vis d'extrusion et deuxièment, la surface de frottement entre la vis et la chemise du cylindre de l'extrudeuse étant plus importante au bout de la vis, zone de sollicitation maximale, donne lieu à une augmentation de la durée de la vis, l'érosion étant répartie sur une surface plus grande.

## Revendications

1. Vis d'extrusion, de matières thermoplastiques, ayant un filet hélicoïdal avec des sommets (5) plats et des flancs (PQ - RX) inclinés et dont le volume de la section utile (PQRX) diminue dans le sens du mouvement de la matière à extruder par l'augmentation du diamètre intérieur (GH) de la vis,
caractérisée en ce que
la section utile (PQRX) a un profil substantiellement trapézoïdal dont la largeur du fond (QR) est constant, et en ce que le pas (AB) de la vis est constant.

2. Vis d'extrusion selon la revendication 1, caractérisée en ce que la largeur du fond (QR) de la section utile est constante sur seulement une partie de la vis.

3. Vis d'extrusion selon la revendication 1 ou 2, caractérisée en ce que le pas (AB) de la vis est constant sur seulement une partie de la vis.

## Patentansprüche

1. Extrudierschnecke für Thermoplaste, die einen schraubenförmigen Schneckengang mit flachen Spitzen (S) und schrägen Flanken (PQ - RX) hat und deren Nutzquerschnittsvolumen (PQRX) in Richtung der Bewegung des zu extrudierenden Materials durch Vergrößerung des Innendurchmessers (GH) der Schnecke abnimmt,
dadurch gekennzeichnet, daß
der Nutzquerschnitt (PQRX) ein im wesentlichen trapezförmiges Profil hat, dessen Grundbreite (QR) konstant ist, und daß die Steigung (AB) der Schnecke konstant ist.

2. Extrudierschnecke nach Anspruch 1, dadurch gekennzeichnet, daß die Grundbreite (QR) des Nutzquerschnitts nur über einen Teil der Schnecke konstant ist.

3. Extrudierschnecke nach Anspruch 1 oder 2, dadurch gekennzeichnet, daß die Steigung (AB) der Schnecke nur über einen Teil der Schnecke konstant ist.

**Claims**

1. Extruder screw, for thermoplastic materials, having a helical thread with flat crests (S) and inclined flanks (PQ - RX) and whose volume of the useful section (PQRX) diminishes in the direction of the movement of the material to be extruded by the increase in the inner diameter (GH) of the screw, characterised in that the useful section (PQRX) has a substantially trapezoidal profile, the width of the root (QR) of which is constant, and in that the pitch (AB) of the screw is constant.

2. Extruder screw according to Claim 1, characterised in that the width of the root (QR) of the useful section is constant over only a portion of the screw.

3. Extruder screw according to Claim 1 or 2, characterised in that the pitch (AB) of the screw is constant over only a portion of the screw.

FIG. 1

FIG. 4

EP 0 332 673 B1

FIG. 2

FIG. 3

FIG. 5

6